# FASCICULE DE BREVET EUROPEEN

(11) **EP 1 516 410 B1**
(45) Date de publication et mention de la délivrance du brevet: **11.05.2011**
(21) Numéro de dépôt: 03761729.7
(22) Date de dépôt: 18.06.2003
(51) Int. Cl.: H02K 5/22, H01R 13/631

(54) **ACTIONNEUR ELECTRIQUE**
ELEKTRISCHER STELLANTRIEB
ELECTRIC ACTUATOR

(30) Priorité: 27.06.2002 FR 0208025
(43) Date de publication de la demande: 23.03.2005
(73) Titulaire: Somfy SAS, 74300 Cluses (FR)
(72) Inventeur: VECCHIATINI, Daniele, I-40128 Bologna (IT); RONCORONI, Paolo, I-20144 Milano (IT); VOLLE, Frédéric, F-74100 Ville-la-Grand (FR); BEAU, Stéphane, F-74700 Sallanches (FR); DEBUSSCHERE, Karine, F-74700 Sallanches (FR)
(74) Mandataire: Bugnion Genève
(86) Numéro de dépôt international: PCT/IB2003/002775
(87) Numéro de publication internationale: WO 2004/004095

(56) Documents cités:
- EP-A- 0 545 698
- EP-A- 0 603 119
- EP-A- 1 119 089
- US-A- 6 022 196

## Description

L'invention concerne un actionneur électrique tubulaire défini selon le préambule de la revendication 1

De tels actionneurs, connus sous le nom de moteurs tubulaires, sont utilisés pour manoeuvrer portes, volets, ou stores enroulables.

Un tel actionneur est plus particulièrement connu du brevet EP 0 603 119. La pièce auxiliaire de connexion est constituée ici d'une pièce cylindrique fixée de manière amovible à l'extrémité du moteur devant être reliée au dispositif de commande, cette pièce auxiliaire contenant ou étant entourée d'une certaine longueur de fil prolongeant le bobinage du stator du moteur et portant des cosses auxquelles sont fixées les extrémités de ces fils. Le moteur, plus précisément le moteur et son réducteur sont montés de préférence ensemble par une extrémité du tube, celle qui permet l'application de la force par le réducteur, plus massive, ayant une conformation plus adaptée et occasionnant le plus petit déplacement sous contrainte. La pièce auxiliaire de connexion est ensuite détachée du moteur et ses cosses sont enfichées sur des cosses correspondantes du dispositif de commande avant le montage de celui-ci dans le tube par l'autre extrémité du tube. La réserve de fil bobiné contenu ou porté par la pièce auxiliaire doit donc présenter une longueur suffisante pour que la manipulation puisse se réaliser aisément à l'extérieur du tube. Cette réalisation présente des inconvénients. D'une part, une importante longueur de fil reste libre et flottante à l'intérieur du tube et risque d'être blessée ou pincée. D'autre part, une partie de ce fil est inutile à la fonction de conduction du courant électrique. Un autre inconvénient important est que cette opération de connexion ne peut pas être automatisée.

L'invention a pour but de proposer une structure obviant aux inconvénients de la structure selon l'art antérieur et, en particulier, permettant d'automatiser l'assemblage du moteur et de son dispositif de commande.

A cet effet, l'actionneur électrique tubulaire selon l'invention est caractérisé par la partie caractérisante de la revendication 1

La connexion du moteur et de son dispositif de commande est ainsi réalisée automatiquement lors du montage des éléments dans le tube.

Différents modes de réalisation sont définis par les revendications dépendantes 2 à 4.

Le dessin annexé représente, à titre d'exemple, un mode d'exécution de l'invention.
La figure 1 est une vue en coupe axiale d'un actionneur tubulaire dans lequel le moteur, le réducteur et le dispositif de commande sont représentés très schématiquement.
La figure 2 est une vue partielle, à plus grande échelle, de la zone de connexion avant connexion.
La figure 3 est une vue en coupe selon III-III de la figure 2.
La figure 4 est une vue en coupe selon IV-IV de la figure 2.
Les figures 5, 6 et 7 illustrent trois phases successives de la connexion du moteur avec son dispositif de commande.

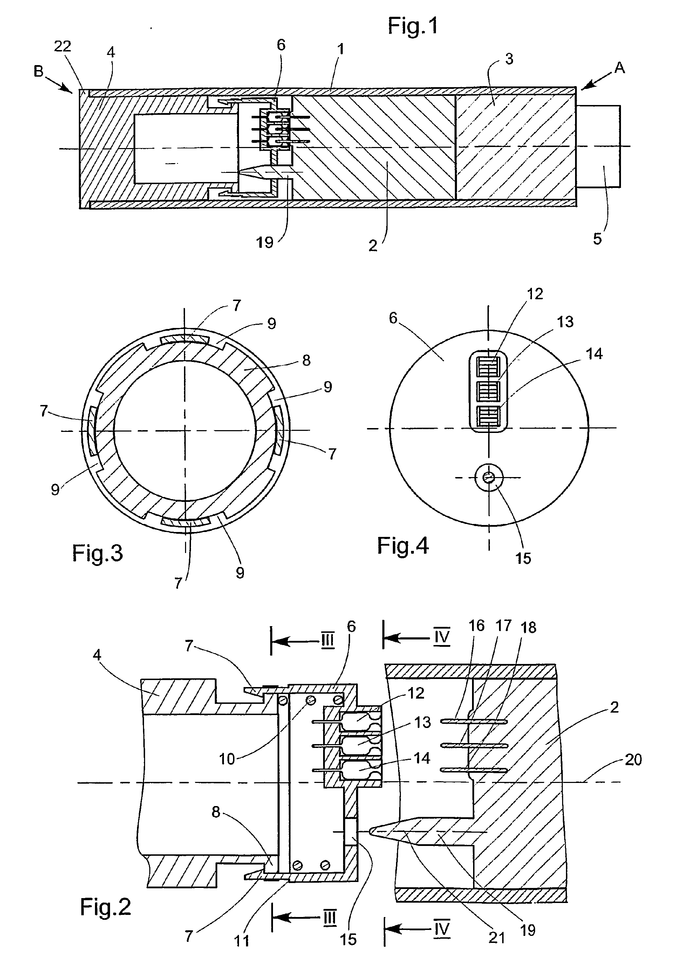

L'actionneur tubulaire représenté schématiquement à la figure 1 comprend, de manière connue, un tube cylindrique métallique 1 dans lequel sont montés à force un moteur 2 associé à un réducteur 3 et un dispositif de commande 4 pour le pilotage du moteur 1. Le dispositif de commande 4 peut aller du simple arrêt automatique en fin de course de la charge entraînée par le moteur à des commandes plus évoluées comme un arrêt sur obstacle, un arrêt en position intermédiaire ou la commande selon un programme particulier. De tels dispositifs sont décrits, par exemple, dans les brevets EP 0 434 614, EP 0524 152, EP 0 568 492 et EP 0 671 542. Le réducteur 3 présente un arbre de sortie 5 pour l'entraînement de la charge à actionner, par exemple un store enroulable, un volet roulant ou une porte. Le dispositif de commande 4 est relié électriquement au moteur 2 au moyen d'une pièce auxiliaire de connexion 6 qui sera décrite plus en détail en relation avec la figure 2.

La figure 2 représente l'actionneur avant la connexion du dispositif de commande 4 au moteur 2. La pièce de connexion 6, en matière synthétique, présente une forme de pot cylindrique muni de quatre pattes flexibles 7 prolongeant la paroi cylindrique et réparties sur la circonférence de la pièce 6. Ces pattes 7 se terminent par un crochet et une rampe permettant l'accrochage de la pièce 6 sur l'extrémité du dispositif de commande 4 qui présente à cet effet un col 8 présentant des créneaux 9 dans lesquels viennent s'engager les pattes 7 de la pièce auxiliaire de connexion 6. La longueur des pattes 7 entre leur crochet et leur base est supérieure à l'épaisseur du col 8. Les créneaux 9 s'étendent sur un arc sensiblement supérieur à la largeur des pattes 7, de telle sorte que la pièce de connexion 6 est fixée sur le dispositif de commande 4 avec un jeu angulaire. A l'intérieur de la pièce de connexion 6 est monté un ressort hélicoïdal 10 travaillant en compression entre l'extrémité du dispositif de commande 4 et le fond de la pièce de connexion 6 de manière à pousser cette pièce et maintenir les extrémités en forme de crochet des pattes 7 en butée contre le col 8. L'épaulement 11 visible à la figure 2 indique le départ des pattes 7. Dans sa partie frontale, la pièce de connexion 6 est munie de trois cosses femelles 12, 13, 14 reliées par des fils non représentés au dispositif de commande 4. Cette même face frontale présente un trou circulaire 15.

De son côté, le moteur 2 est muni de trois broches 16, 17, 18 et d'un doigt 19 s'étendant parallèlement à l'axe 20 du moteur et terminé par un partie conique 21. Lorsque le moteur 2 et le dispositif de commande 4 sont montés dans le tube 1, les axes du trou 15 et du doigt 19 sont à même distance de l'axe 20 du tube 1.

L'assemblage de l'actionneur sera maintenant décrit au moyen des figures 2 à 7.

On introduit tout d'abord à force le moteur 2 et son réducteur 3 dans le tube 1 par l'une des extrémités de ce tube, c'est-à-dire l'extrémité A représentée à la figure 1. On présente ensuite le dispositif de commande 4 en face de l'autre extrémité B du tube 1 en orientant celle-ci de façon approximative, par simple repère visuel, la seule contrainte étant que le doigt de guidage 19 du moteur pénètre à coup sûr dans l'orifice correspondant 15 de la pièce auxiliaire de connexion 6.

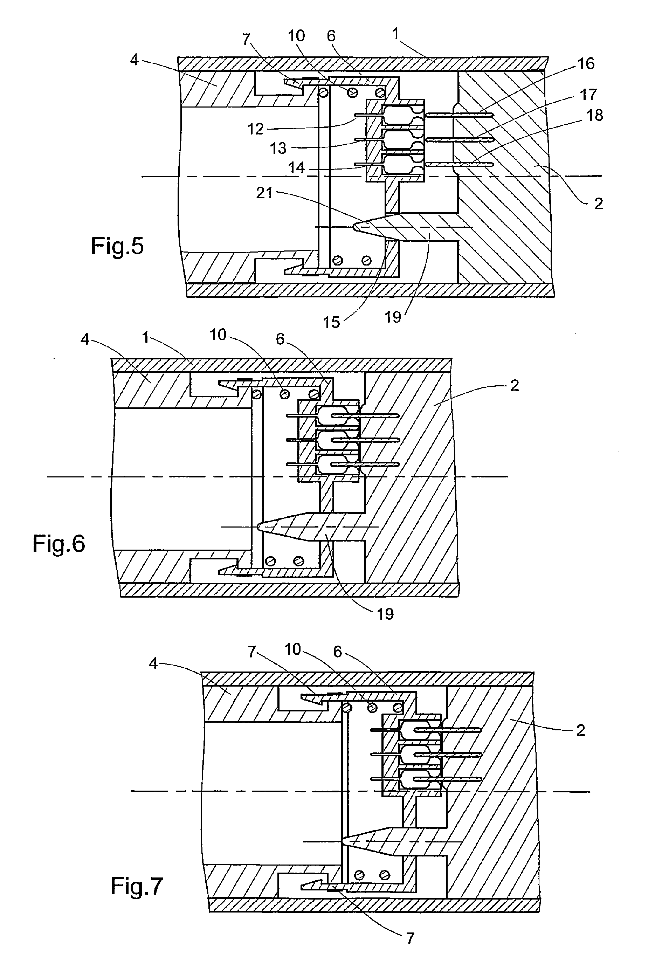

On engage ensuite le dispositif de commande 4 dans le tube 1. Pendant l'engagement, l'extrémité conique 21 du doigt de guidage 19 pénètre dans l'orifice 15 de la pièce de connexion 6 et fait tourner si nécessaire cette pièce de connexion 6 autour de son axe de manière à aligner l'axe de l'orifice 15 et l'axe du doigt 19 et, par conséquent, à amener les cosses 12 à 14 en face des broches 16 à 18, comme représenté à la figure 5.

On continue de pousser sur le dispositif de commande 4 de telle sorte que les broches 16 à 18 s'engagent dans les cosses 12 à 14, comme représenté à la figure 6. A cet effet, la force du ressort 10 est sensiblement supérieure à la force qu'il faut pour introduire les broches dans les cosses. La pièce de connexion 6 arrive finalement en butée contre le moteur 2, comme représenté à la figure 6. La connexion est réalisée.

Le dispositif de commande 4 n'est toutefois pas encore entièrement introduit dans le tube 1. On continue donc de pousser sur le dispositif de commande 4 jusqu'à ce que la collerette 22 (représentée à la figure 1) qui le termine vienne en butée contre l'extrémité B du tube 1. La poursuite du déplacement du dispositif de commande 4 est possible en raison du jeu axial que la pièce de connexion 6 présente avec le dispositif de commande 4. La position finale est représentée à la figure 7. La pièce de connexion 6 a reculé par rapport au dispositif de commande 4 en comprimant le ressort 10.

Le jeu axial permet d'assurer notamment une unité d'aspect extérieur des actionneurs et une étanchéité de la fermeture de l'extrémité B du tube par la collerette 22. La liberté axiale de la pièce auxiliaire de connexion permet aussi d'accepter les dispersions inévitables dans le positionnement axial des cosses par rapport aux broches solidaires du moteur. En effet, les broches et les cosses étant au centre d'une chaîne de cotes comprenant les dimensions axiales, du moteur, du réducteur, du tube d'enroulement et du dispositif de commande qui présentent chacune des dispersions, il est courant que la position axiale des broches par rapport aux cosses varie dans une fourchette d'environ 3mm.

Les cosses et broches représentées peuvent être remplacées par tout autre moyen de connexion enfichable.

La pièce auxiliaire de connexion pourrait être montée alternativement sur le moteur au lieu d'être montée sur le dispositif de commande. La solidarisation de la pièce de connexion avec l'un des éléments, moteur ou dispositif de commande, pourrait être réalisée par des moyens autres que ceux représentés. Elle pourrait notamment être montée à frottement sur une portée ou dans un logement de l'un des éléments, les seuls exigences à respecter étant les jeux angulaire et axial et une force de frottement sensiblement supérieure à la force nécessaire à l'enfichage des moyens de connexion du moteur et du dispositif de commande. Les moyens de positionnement angulaires pourraient également être réalisés de manière différente.

## Revendications

1. Actionneur électrique tubulaire comprenant un tube (1) dans lequel sont montés un premier élément comprenant un moteur (2) et un deuxième élément constitué d'un dispositif de commande du moteur (4), ces éléments étant reliés électriquement par une pièce auxiliaire de connexion (6) équipant l'un des éléments et munie de moyens de connexion enfichables (12, 13, 14) reliés électriquement à l'élément sur lequel la pièce auxiliaire de connexion (6) est montée, l'autre élément étant muni de moyens de connexion complémentaires enfichables (16, 17, 18) par lesquels cet élément est connecté aux moyens de connexion (12, 13, 14) de la pièce auxiliaire (6), **caractérisé en ce que** la pièce auxiliaire de connexion (6) est montée sur l'élément qu'elle équipe avec un jeu angulaire de manière à pouvoir être positionnée angulairement et avec un jeu axial de manière à pouvoir être repoussée par l'autre élément, **en ce qu'**elle présente des moyens de positionnement angulaire (15) et **en ce que** l'autre élément présente des moyens de positionnement angulaire (19) coopérant avec les moyens de positionnement angulaire de la pièce auxiliaire de connexion (6) pour le positionnement angulaire de cette pièce auxiliaire (6).

2. Actionneur selon la revendication 1, **caractérisé en ce que** la pièce auxiliaire de connexion (6) est retenue par accrochage sur l'élément qu'elle équipe et **en ce qu'**un moyen élastique (10) s'oppose à sa poussée par l'autre élément.

3. Actionneur selon la revendication 1, **caractérisé en ce que** la pièce auxiliaire de connexion (6) est montée à frottement sur l'élément qu'elle équipe, la force de frottement étant sensiblement supérieure à la force nécessaire à l'enfichage des moyens de connexion (12, 13, 14, 16, 17, 18) du moteur et du dispositif de commande.

4. Actionneur selon l'une des revendications 1 à 3, **caractérisé en ce que** les moyens de positionnement angulaire sont constitués, d'une part, d'un trou circulaire (15) et, d'autre part, d'un doigt (19) présentant une extrémité conique (21).

## Claims

1. Tubular electric actuator, including a tube (1) in which are mounted a first element comprising a motor (2), and a second element constituted by a control device (4) for the motor, these elements being electrically connected together by an auxiliary connecting piece (6) that equips one of said elements and includes pluggable connection means (12, 13, 14) electrically connected to the element on which the auxiliary connecting piece (6) is mounted, the other element containing complementary pluggable connecting means (16, 17, 18) through which this element is connected to the connecting means (12, 13, 14) of the auxiliary connection piece (6), **characterised in that** the auxiliary connecting piece (6) is mounted with an angular clearance on the element that it equips so that it can be positioned over an angle, and with an axial clearance so that it can be pushed by the other element; **in that** it includes means for an angular positioning (15); and **in that** the other element includes means for an angular positioning (19) coacting with the angular positioning means of the auxiliary connecting piece for the angular positioning of this auxiliary piece (6).

2. Actuator according to claim 1, **characterised in that** the auxiliary connecting piece (6) is retained by interlocking on the element that it equips, and **in that** a elastic means (10) prevents pushing by the other element.

3. Actuator according to claim 1, **characterised in that** the auxiliary connecting piece (6) is frictionally mounted on the element that it equips, the frictional force being sensibly superior to the force necessary for the plugging in of the connecting means (12, 13, 14, 16, 17, 18) of the motor and of the control device.

4. Actuator according to any one of claims 1 to 3, **characterised in that** the angular positioning means are formed, on one hand, by a circular hole (15) and, on the other hand, by a finger (19) having a conical extremity (21).

## Patentansprüche

1. Rohrförmiger elektrischer Antrieb, mit einem Rohr (1), in welchem ein erstes Element mit einem Motor (2) und ein zweites Element aus einer Steuervorrichtung (4) für den Motor eingebracht sind, wobei diese Elemente elektrisch über ein Hilfsverbindungsstück (6) miteinander verbunden sind, welches an einem der Elemente angebracht ist und mit steckbaren Mitteln (12, 13, 14) zur Verbindung ausgestattet ist, welche elektrisch mit dem Element verbunden sind, auf dem das Hilfsverbindungsstück (6) angebracht ist, und wobei das andere Element mit komplementären steckbaren Verbindungsmitteln (16, 17, 18) versehen ist, mit denen dieses Element an die Verbindungsmittel (12, 13, 14) des Hilfsverbindungsstücks (6) angeschlossen ist, **dadurch gekennzeichnet, dass** das Hilfsverbindungsstück (6) mit einem Winkelspiel auf dem damit ausgerüsteten Element angebracht ist, um eine winkelmässige Positionierung zu ermöglichen, und mit einem axialen Spiel, um vom anderen Element verschoben zu werden, dass es Mittel zur winkelmässigen Positionierung (15) aufweist, und dass das andere Element Mittel zur winkelmässigen Positionierung (19) besitzt, die mit den Mittel zur winkelmässigen Positionierung des Hilfsverbindungsstücks (6) zusammenwirken, um die winkelmässige Positionierung dieses Hilfsverbindungsstücks (6) zu erzielen.

2. Antrieb nach Anspruch 1, **dadurch gekennzeichnet, dass** das Hilfsverbindungsstück (6) durch Eingriff in das damit ausgerüstete Element festgehalten wird, und dass ein federndes Mittel (10) ein Weiterschieben durch das andere Element verhindert.

3. Antrieb nach Anspruch 1, **dadurch gekennzeichnet, dass** das Hilfsverbindungsstück (6) reibungsschlüssig auf dem damit ausgerüsteten Element angebracht ist, wobei die Reibungskraft wesentlich höher als diejenige Kraft ist, die zum Einschieben der Verbindungsmittel (12, 13, 14, 16, 17, 18) des Motors und der Steuervorrichtung erforderlich ist.

4. Antrieb nach einem der Ansprüche 1 bis 3, **dadurch gekennzeichnet, dass** die Mittel zur winkelmässigen Positionierung einerseits aus einem kreisrunden Loch (15) und andererseits aus einem Finger (19) mit einem konischen Ende (21) bestehen.
